# FASCICULE DE BREVET EUROPEEN

(11) **EP 0 418 106 B1**
(45) Date de publication et mention de la délivrance du brevet: **15.12.1993**
(21) Numéro de dépôt: 90402284.5
(22) Date de dépôt: 10.08.1990
(51) Int. Cl.: A23G 3/00, A23G 3/02, A23L 1/307

(54) **Procédé de préparation de confiseries à partir d'une substance de charge**
Verfahren zur Zubereitung von Süsswaren aus einem Füllstoff
Process for the preparation of sweets from a bulking agent

(30) Priorité: 11.08.1989 FR 8910844
(43) Date de publication de la demande: 20.03.1991
(73) Titulaire: CLEXTRAL, F-92400 Courbevoie (FR); GENERAL FOODS FRANCE, F-92500 Rueil Malmaison (FR)
(72) Inventeur: Benoit, Yannick, F-51100 Reims (FR); Mange, Christian, F-60000 Beauvais (FR); Martin, Thierry, F-42000 St.Etienne (FR); Mecrin, Eric, F-51100 Reims (FR)
(74) Mandataire: Lanceplaine, Jean-Claude

(56) Documents cités:
- EP-A- 0 234 792
- EP-A- 0 247 926
- FR-A- 2 288 475
- FR-A- 2 554 685
- FR-A- 2 600 496
- US-A- 4 528 206

## Description

La présente invention se situe dans le domaine de la confiserie et a pour objet un procédé de préparation de confiseries à partir d'une substance de charge afin d'en réaliser la transformation pour obtenir une masse amorphe qui est ensuite, comme un sucre cuit, élaborée par pressage, coulage, moulage ou fourrage afin d'obtenir des produits habituels de confiserie.

Afin de mieux situer la présente invention, il est utile de rappeler quelques généralités sur ces produits, en particulier leurs propriétés physico-chimiques, biochimiques, organoleptiques, ce qui permettra également d'apprécier l'intérêt industriel de ce procédé.

Le polydextrose, découvert par Pfizer Incorporated, est un polymère de glucose obtenu par polymérisation à chaud en présence d'acide citrique comme catalyseur et de sorbitol comme agent plastifiant.

Le produit obtenu présente des caractères diététiques très intéressants.

En effet, d'une part, son pouvoir calorique est très faible de l'ordre de 4,18 KJ/g, à comparer au 16,77 KJ/g pour le saccharose, d'autre part il n'est pas décomposé par les micro-organismes de la flore buccale et ne peut ainsi servir de substrat pour former des acides déminéralisants de l'émail et de la dentine des dents.

Par ailleurs, il est fusible à chaud et après une telle transformation il se présente sous la forme d'une masse vitreuse claire analogue à un sucre cuit. Bien que cette opération présente quelques difficultés, que la présente invention se propose de résoudre comme on le verra ultérieurement, le polydextrose permet ainsi de réaliser des produits de confiserie à bas pouvoir calorique et acariogènes.

Le polydextrose est composé d'une chaîne de polymères de glucose avec une prédominance des liaisons 1-6 entre les molécules de glucose, ainsi que quelques liaisons avec des molécules d'acide citrique et de sorbitol subsistant comme traces des produits d'élaboration.

Le polydextrose a une structure amorphe et se présente sous la forme d'une poudre blanche, très soluble dans l'eau. On peut à la température ambiante obtenir ainsi des solutions stables à une concentration en produit sec de 80%, il est d'ailleurs commercialisé sous cette forme de solution concentrée à 70% sous la dénomination de polydextrose-N. A l'état sec et pulvérulent il est simplement dénommé polydextrose.

Le polydextrose passe à l'état liquide à une température de l'ordre de 130°C. Au refroidissement, du fait de sa structure amorphe, il ne cristallise pas, contrairement au saccharose par exemple. Il se présente sous la forme d'une masse vitreuse, transparente, très légèrement jaune clair, ayant l'apparence d'un sucre cuit. On peut cependant noter que le polydextrose, que ce soit à l'état de masse cuite, ou du produit initial, a un pouvoir édulcorant pratiquement nul, et une saveur légèrement acide. Lors de son utilisation afin d'élaborer des produits de confiserie, il est donc nécessaire de lui adjoindre des édulcorants renforcés pour donner à ces produits leur goût traditionnel tout en conservant le caractère acariogène et le faible pouvoir calorique qui sont propres au polydextrose.

Par ailleurs, le polydextrose, qu'il soit sous la forme pulvérulente ou sous celle d'une solution, subit une dégradation thermique qui rend sa transformation délicate. C'est ainsi qu'à l'état de solution aqueuse, par exemple, celle du polydextrose-N, alors qu'à 25°C il est très stable et d'un coloris jaune très clair, à partir de 45°C l'intensité de cette couleur croît avec la température et le temps d'exposition avec celle-ci. A une température voisine de 140°C, il devient d'une couleur "brun foncé" et développe un goût amer, qui le rend impropre à un usage en confiserie. Le polydextrose en poudre a une stabilité un peu meilleure que celle de la solution pour les températures inférieures à 100°C, mais présente les mêmes altérations de goût et de couleur vers 140°C.

Par conséquent, les procédés de mise en oeuvre d'un tel produit doivent permettre d'opérer dans une fourchette de température très réduite pour assurer la liquéfaction à 130°C et rester en dessous de la température de dégradation thermique de 140°C, et avec un temps de séjour du produit très court.

Le procédé selon la présente invention entre autres avantages, par rapport au procédé traditionnel, satisfait ces critères.

En effet, le procédé traditionnel dans le domaine de la fabrication d'un sucre cuit à partir d'une substance de charge, telle que le polydextrose, diffère assez peu de ce qui est mis en oeuvre pour obtenir ce type de produit à partir du saccharose ou du glucose. Ce procédé comporte les principales étapes suivantes :
- une mise en solution aqueuse du polydextrose, et/ou l'utilisation d'une solution déja préparée comme le polydextrose-N, et un chauffage de cette solution,
- une cuite du sirop avec évaporation sous vide,
- un refroidissement,
- une addition des arômes et des colorants,
- et une élaboration des produits finis.

L'évaporation sous vide nécessite évidemment un temps de séjour du sirop dans l'appareil qui remplit cette fonction, suffisamment long pour extraire l'eau de la masse cuite et obtenir un produit dont la teneur en eau résiduelle soit inférieure à 5-6%. On voit donc tout de suite qu'il y a dans cette opération une difficulté afin de ne pas altérer le produit, qui rend le procédé traditionnel très délicat sinon impossible pour cette application.

On connaît dans le FR-A-2 554 685 un procédé de préparation de confiseries à partir de produits de charge constitués par des polymères de sucre naturel, notamment de l'amidon, qui consiste à effectuer une addition d'eau inférieure à ce qui est nécessaire pour la mise en solution complète du produit et une gélification contrôlée de ce produit directement dans un transporteur à vis

La présente invention est relative à un nouveau procédé de préparation de confiseries qui permet de réaliser une masse fondue à partir d'un produit de charge de manière plus simple et plus précise que le procédé traditionnel, tout en obtenant des produits de confiserie d'une qualité supérieure.

L'invention a pour objet un procédé de préparation de confiseries à partir de produits de charge constitués par du polydextrose ,
caractérisé en ce que l'on effectue une addition d'eau inférieure à ce qui est nécessaire pour la mise en solution complète du produit et une fusion contrôlée de ce produit directement dans un transporteur à vis l'addition d'eau et la fusion réalisée en continu dans le transporteur à vis comprenant :
- une phase d'alimentation du produit dans le transporteur à vis, d'addition d'eau et de chauffage,
- une phase de malaxage et de chauffage pour l'obtention d'une masse fondue,
- une phase de dégazage et de convoyage de la masse fondue,
- une phase de refroidissement de la masse fondue,
- et une phase d'incorporation d'additifs et d'évacuation de la masse fondue.

La quantité d'eau ajoutée au produit est celle strictement nécessaire pour obtenir une viscosité et une plasticité compatibles avec son traitement dans le transporteur à vis.

La concentration en eau n'est que de l'ordre de 10%, donc très inférieure à ce qui est normalement utilisée pour la mise en solution à la température ambiante.

Par conséquent, le procédé, objet de la présente invention nécessite une opération de cuite avec évaporation sous vide très brève, et le temps de séjour du produit dans l'appareil est très court, condition indispensable pour obtenir une masse fondue de qualité.

A cet effet, le procédé selon la présente invention met en oeuvre un transporteur à vis.

Ce type d'appareil est adapté au traitement d'un produit nécessitant un malaxage, une homogénéisation ou un traitement thermique. L'énergie de transformation du produit résulte de l'énergie mécanique d'entrainement de la vis, dont une partie est dissipée sous forme de chaleur au sein même du produit. Avec ce type d'appareil, il est également possible d'apporter un complément d'énergie thermique, ou bien encore lorsque le procédé l'exige de refroidir le produit à un certain stade de son traitement, c'est à dire en fait, en une zone précise du transporteur à vis.

A titre d'exemple de mise en oeuvre de ce type de transporteur à vis également appelé cuiseur-extrudeur, on peut citer le FR-A-2 288 475 qui décrit un procédé de traitement d'un sirop de glucose et de saccharose afin d'en assurer le mélange et obtenir un sirop permettant par un traitement ultérieur de réaliser des produits de confiserie et le FR-A-2 600 496 qui décrit un procédé et un dispositif de préparation de pâte d'amande à partir d'amandes entières émondées et de glucide.

D'autres caractéristiques et avantages de l'invention apparaîtront au cours de la description qui va suivre, faite en référence aux dessins annexés sur lesquels :
- la Fig. 1 représente de manière schématique une installation correspondant au procédé traditionnel de préparation d'un sucre cuit,
- la Fig. 2 représente de manière schématique les appareils de mise en oeuvre dans le procédé conforme à la présente invention,
- la Fig. 3 est une vue en coupe dans un plan vertical passant par l'axe d'une vis du transporteur à vis utilisé dans le procédé conforme à l'invention,
- la Fig. 4 est une vue en coupe selon la ligne 4-4 de la Fig. 3.

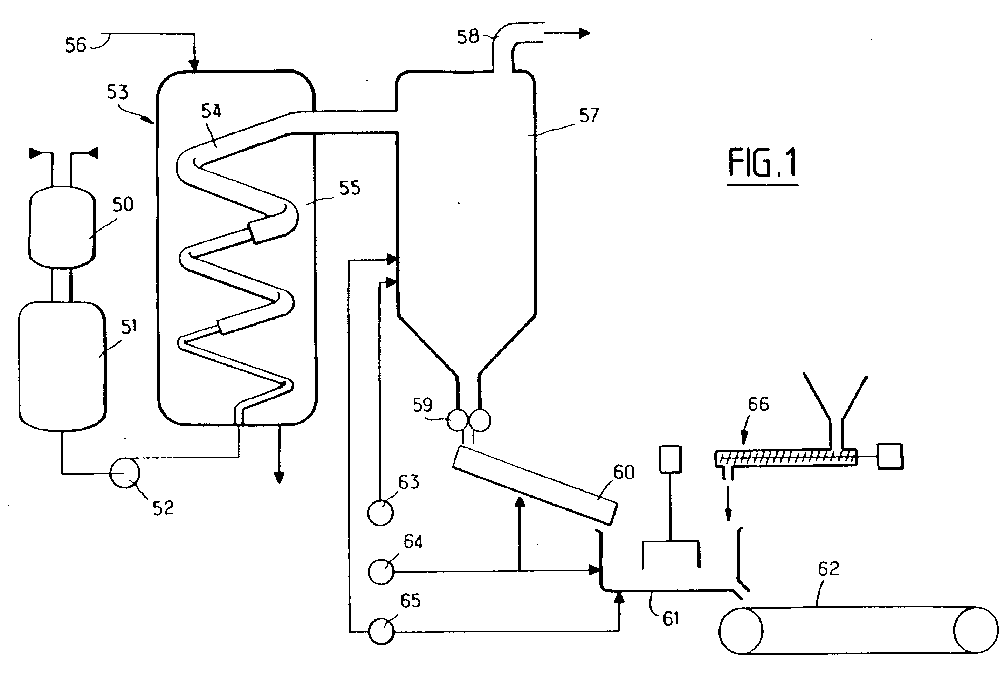

La FIg. 1 représente de manière schématique une installation correspondant au procédé traditionnel de préparation d'un sucre cuit. En suivant le produit au cours de son élaboration, l'installation comprend tout d'abord un dispositif de dosage 50 par exemple du type gravitaire, qui assure l'alimentation du produit de charge polydextrose sous forme commerciale pulvérulente, et de l'eau au débit et dans le rapport souhaités.

Les produits sont ensuite introduits dans une cuve 51 de mise en solution où ils sont mélangés et réchauffés. Une pompe 52 aspire la solution dans une cuve de mélange 51 et la refoule dans un cuiseur 53.

Le cuiseur 53 ou dôme de vapeur, tel que représenté à la Fig. 1, est constitué d'un serpentin 54 à section croissante de l'amont vers l'aval, disposé dans un réservoir 55 où la vapeur de chauffe est introduite par une canalisation 56.

Le serpentin 54 débouche dans une chambre à vide 57 maintenue sous pression réduite par aspiration au moyen d'une tuyauterie 58 implantée en partie supérieure. Par cette tuyauterie 58 est également réalisé l'évacuation de l'eau de mise en solution du sucre, l'eau étant sous forme de vapeur.

Lors de son parcours le long du serpentin 54, sous l'effet de la cuite sous vide, la solution ou sirop se concentre, l'eau sous forme de vapeur se sépare de la solution et circule ainsi au-dessus de celle-ci.

A l'extrémité supérieure du serpentin 54, la concentration massique en eau du sirop est descendue à une valeur de l'ordre de 5 à 8% et à ce stade il est habituellement dénommé sucre cuit. Le sucre cuit se déverse alors dans la chambre à vide 57. La vapeur d'eau est entraînée par l'aspiration de mise sous vide et le sucre cuit est recueilli en partie basse, où il est évacué par une pompe d'extraction 59.

Au refoulement de la pompe d'extraction 59, le sucre cuit, par l'intermédiaire d'une glissière thermostatée 60, s'écoule dans une cuve de mélange 61 à partir de laquelle il est ensuite distribué sur un tapis de refroidissement et de tempérage 62. A l'extrémité aval de celui-ci, le sucre cuit à alors la plasticité nécessaire pour qu'il puisse être repris par les machines de transformation qui élaborent le produit fini.

Les additifs liquides tels que : acides, arômes et colorants sont injectés au moyen de pompes doseuses respectivement 63, 64 et 65 en divers points de l'installation comme par exemple la chambre à vide 57, la glissière 60 et la cuve de mélange 61. Les additifs solides tels que les acides cristallisés sont introduits quand à eux dans la cuve de mélange 61, par exemple au moyen d'un distributeur à vis doseuse 66.

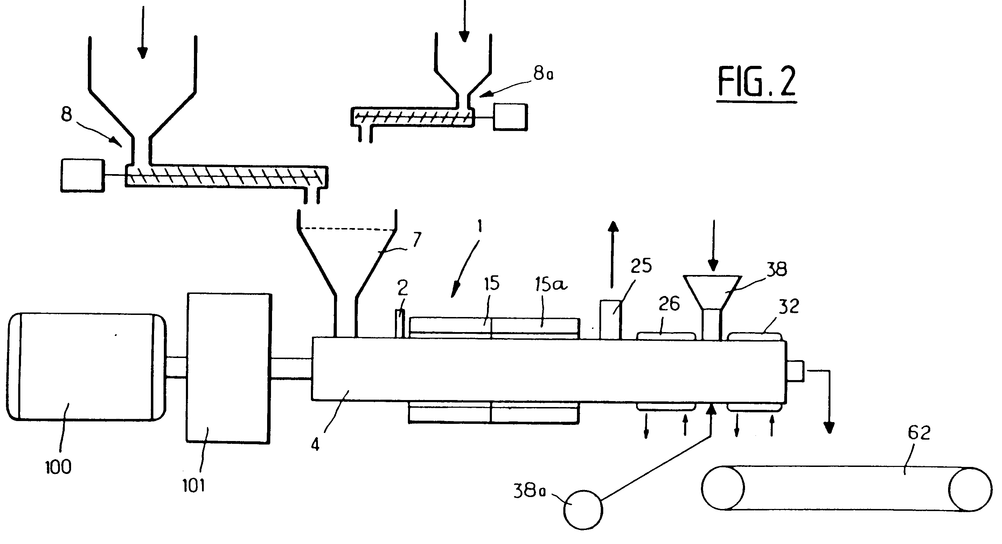

La Fig. 2 montre également de manière schématique une installation mettant en oeuvre un procédé conforme à l'invention.

Cette installation est essentiellement constituée par un transporteur à vis 1, qui est avantageusement du type à deux vis corotatives, entraînées en rotation par un moteur électrique 100 par l'intermédiaire d'un réducteur 101.

La description détaillée de la constitution de ces vis et les étapes de transformation du produit traité seront présentées ultérieurement.

A l'extrémité amont de ce transporteur à vis 1 est disposée une trémis d'alimentation 7 dans laquelle le produit de charge est distribué, par exemple, au moyen d'un doseur à vis 8. Le doseur peut lui même être alimenté par un appareil du type gravitaire non représenté. Le produit de charge est ainsi admis dans le transporteur à vis 1, sous une forme commerciale pulvérulente, sans addition d'eau.

Le corps du transporteur à vis 1, ou fourreau, comporte une arrivée d'eau additionnelle 2, des moyens de chauffage 15 et 15a sur une première partie amont, dans le sens du transport de la matière, et des moyens de refroidissement 26 et 32 sur la partie aval.

Sur cette partie aval sont également disposées une tuyauterie ou cheminée de dégazage 25, une trémie d'alimentation 38 d'additifs solides et une injection au moyen d'une pompe doseuse 38a d'additifs liquides.

On peut noter dès à présent que l'apport en additifs solides peut également être fait dans la trémie principale 7 d'alimentation en produit de charge, par exemple au moyen d'un doseur à vis 8a, comme ceci sera montré dans les exemples de mise en oeuvre du procédé.

Le produit de charge, après fusion contrôlée dans le transporteur à vis 1, se présente à la sortie de celui-ci sous la forme d'une masse cuite analogue au sucre cuit et il est alors distribué sur un tapis de refroidissement et de tempérage 62, à l'extrémité duquel comme dans le procédé traditionnel il présente la plasticité requise pour être repris par les machines de transformation.

La comparaison des Figs. 1 et 2 montre de manière évidente les avantages du procédé, objet de l'invention, par rapport au procédé traditionnel. En effet, le transporteur à vis 1 réalise une transformation équivalente à ce qui est habituellement fait dans l'ensemble des appareils, c'est à dire dans la cuve de mise en solution 51, la pompe 52, le cuiseur 53, la chambre à vide 57, la pompe d'extraction 59, la glissière 60 et la cuve de mélange 61.

Il en résulte ainsi une installation plus compacte d'une conduite et d'une régulation plus aisées. On obtient également une consommation spécifique d'énergie plus faible que dans le procédé traditionnel puisque dans ce dernier en plus de la chaleur de fusion du produit de base, il est nécessaire de vaporiser l'eau de mise en solution et de l'extraire sous vide.

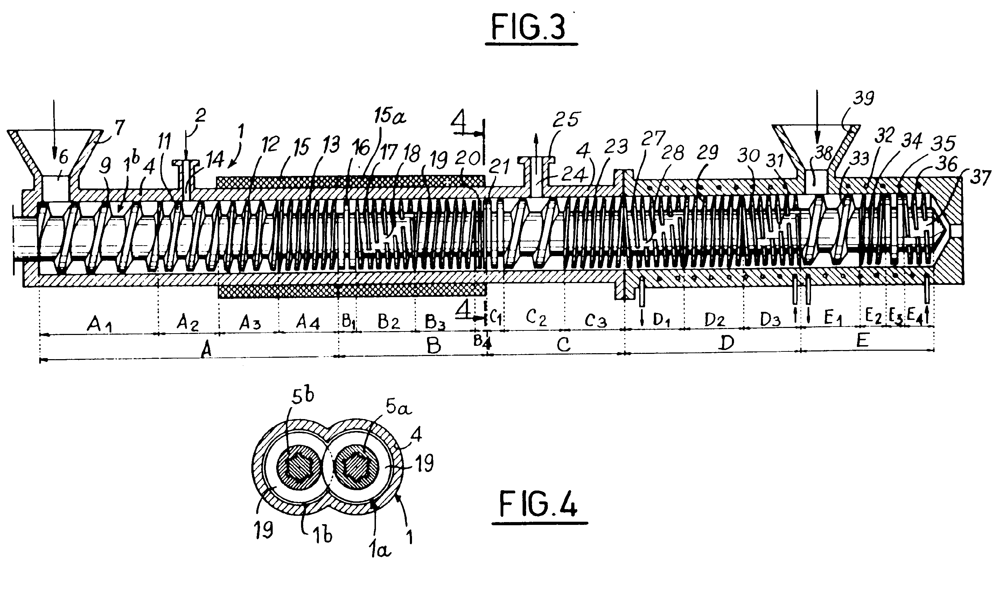

En se reportant maintenant aux Figs. 3 et 4, on voit que le transporteur à vis 1 comprend au moins deux vis 1a et 1b entraînées en rotation autour de leurs axes à l'intérieur d'une enceinte allongée formant le fourreau 4 qui les enveloppe.

Les vis 1a et 1b sont munies de filets hélicoïdaux ou autres organes périphériques qui engrènent les uns dans les autres, et la paroi interne du fourreau 4 forme deux lobes cylindriques sécants de diamètre intérieur légèrement supérieur au diamètre extérieur des filets ou des organes périphériques (Fig. 4). Ces filets sont imbriqués les uns dans les autres, et les deux vis 1a et 1b sont entraînées à la même vitesse de rotation et dans le même sens de telle sorte que les deux vis sont identiques, les filets étant simplement décalés les uns par rapport aux autres.

Comme on le voit sur la Fig. 4, les vis 1a et 1b sont avantageusement constituées d'arbres cannelés 5a et 5b sur lesquels sont montés des tronçons de vis. L'alésage intérieur de chacun de ces tronçons est muni de cannelures correspondant à celle de l'arbre 5a et 5b et la partie extérieure est munie de filets hélicoïdaux dont le pas diffère suivant le tronçon considéré pour le traitement et le transport de la matière. On peut ainsi disposer d'un assez grand nombre de tronçons permettant de faire varier le pas, la profondeur, le nombre de filets et la longueur de chaque zone de traitement.

Ainsi, le transporteur à vis 1 est constitué de plusieurs zones successives correspondant chacune à une phase particulière du procédé.
- une zone A d'alimentation de la substance de charge, d'injection d'eau, et de chauffage,
- une zone B de malaxage, de cisaillement et de chauffage,
- une zone C de dégazage et de convoyage,
- une zone D de refroidissement,
- et une zone E d'incorporation d'additifs et d'évacuation de la masse fondue.

Dans la zone A d'alimentation, le fourreau 4 est percé d'un orifice 6 surmonté d'une trémie 7 d'amenée de la substance de charge à l'état solide pulvérulent. La substance de charge est elle même distribuée au-dessus de la trémie 7 par un doseur 8 par exemple du type à vis. Dans la zone A, les vis 1a et 1b sont munies, sur un premier tronçon A1, de filets 9 à pas large afin d'assurer le transfert du produit introduit par l'orifice 6 qui s'ouvre largement sur les deux vis 1a et 1b pour répartir la matière dans les filets 9, qui est donc immédiatement transportée vers l'aval par l'effet de rotation et d'engrènement desdites vis.

A l'aval de ce premier tronçon, les vis 1a et 1b sont équipées de plusieures tronçon 3 dans l'exemple considéré, A2, A3 et A4 dont le pas des filets respectivement 11, 12 et 13 décroit de l'amont vers l'aval et qui assurent le transport de la matière, son malaxage et son mélange homogène avec l'eau d'appoint introduite par un orifice 14 aménagé sur le fourreau 4.

Cette zone A comporte, à l'aval de l'orifice 14 un moyen 15 de chauffage externe du fourreau 4 constitué par exemple par un collier de chauffage par induction, ce qui assure ainsi la montée en température de la matière.

La matière est donc immédiatement transportée vers l'aval et pénètre dans la zone B de malaxage, de cisaillement et de chauffage.

Cette zone B comporte un premier tronçon B1 dans lequel les vis 1a et 1b sont constituées de disques malaxeurs (16) qui ont pour but d'homogénéiser le produit en particulier après le premier chauffage de la zone A.

Ensuite la zone B comporte un deuxième tronçon B2, qui constitue une phase de cisaillement. A cet effet, les 1a et 1b sont munies de "contre-filets" dont les filets hélicoïdaux 17 ont un sens d'enroulement inverse par rapport à celui assurant le transfert du produit dans le transporteur à vis 1. Dans ces filets 17 sont ménagées des ouvertures 18 qui s'étendent depuis le noyau de chaque vis 1a et 1b jusqu'à la périphérie des filets et qui sont en outre régulièrement réparties autour de l'axe.

Grâce à ce tronçon B2, on contrôle le passage du débit de la matière vers l'aval, ce qui détermine un freinage dans cette zone et une montée en pression à l'amont. Par ailleurs, il s'ensuit un important cisaillement qui assure une très bonne homogénéisation de la matière. De plus, le cisaillement et le malaxage entraînent l'échauffement au sein même de la matière, une partie du travail mécanique étant convertie en énergie thermique.

La matière passe ensuite dans un troisième tronçon B3 dans la zone B où les vis 1a et 1b sont munies de filets 19 dont l'enroulement hélicoïdal est dans le sens de transfert de la matière, et qui propulse ainsi la matière vers l'aval.

Le quatrième tronçon B4 de cette zone B est équipée de disques de freinage 20 qui ont pour rôle de créer une perte de charge s'opposant à l'écoulement de la matière. Au niveau de la zone B le fourreau 4 est également équipé d'un moyen de chauffage externe 15a constitué par exemple par des colliers de chauffage à induction.

A la sortie de la zone B, la matière est à l'état de fusion contrôlée souhaitée et sa viscosité est très faible.

Grâce aux disques de freinage 20, on contrôle le débit de la matière afin que le temps de séjour dans les zones A et B soit suffisant pour que l'apport d'énergie de ladite matière, énergie mécanique et énergie thermique extérieure, permette d'obtenir la fusion contrôlée de la charge admise à l'entrée du transporteur à vis 1.

A la sortie de la zone B, la masse cuite pénètre dans la zone C qui est essentiellement une phase de dégazage.

La zone C est constituée de l'amont vers l'aval, d'un tronçon de disques malaxeurs (21) de réhomogénéisation de la matière à la sortie des disques de freinage 20 du tronçon B4, et deux tronçons C2 et C3 de transfert dont le premier C2 comporte des filets 22 à pas relativement grand et le second C3 comporte des filets 23 à pas réduit.

En regard du tronçon C2, le fourreau 4 est percé d'un orifice 24 de dégazage surmonté d'une cheminée 25 et qui permet à l'eau contenue dans la masse cuite d'être évacuée sous forme de vapeur. Cette évacuation se fait normalement à l'atmosphère, mais peut également être réalisée sous vide.

Le fourreau 4 au niveau de cette zone C ne comporte pas de moyen de chauffage, si bien que la température de la masse cuite décroit donc légèrement durant son transfert dans cette zone.

La zone D est essentiellement une zone de refroidissement et à cet effet le fourreau 4 est équipé d'une chemise de refroidissement 26 dans laquelle est assurée par exemple une circulation d'eau.

Dans cette zone D, les vis 1a et 1b sont constituées de trois tronçons D1, D2 et D3. Le premier tronçon D1 est formé par des "contre-filets" 27 dans lesquels sont ménagées des ouvertures 28, le deuxième tronçon D2 est formé par des filets 29 de transfert à pas réduit et le troisième tronçon D3 est formé par des "contre-filets" 30 dans lesquels sont ménagées des ouvertures 31.

Les contre-filets 27 et 30 ont pour objet de créer une pression positive dans le tronçon amont C de dégazage, et également d'obtenir, du fait de leur effet de cisaillement et de malaxage très important, de très bonnes conditions de refroidissement homogènes de la masse fondue.

La zone E ou partie aval du transporteur à vis 1, correspond à la dernière phase de traitement de la matière avant son évacuation vers une chaîne de conditionnement en produit fini de confiserie.

Dans cette zone E, le fourreau 4 comporte, comme dans la zone D, une chemise de refroidissement 32 dans laquelle est assurée par exemple une circulation d'eau afin, d'une part, d'amener la viscosité de la matière à une valeur compatible à son utilisation ultérieure et, d'autre part, de réduire la température afin de ne pas modifier ou altérer les additifs qui seront injectés dans la matière lors de son transfert dans cette zone E.

Dans la zone E, les vis 1a et 1b comportent un tronçon E1 de convoyage formé par des filets 33 à pas relativement grand, un tronçon 32 de compression formé par des filets 34 à pas réduit, un tronçon 33 de disques malaxeurs 35 d'homogénéisation, et un dernier tronçon 34 formé par des "contre-filets" 36 dans lesquels sont ménagées des ouvertures 37.

Au niveau du tronçon E1, le fourreau 4 comporte une ouverture 38 surmontée d'une trémie 39 et dans laquelle sont injectés des additifs par exemple au moyen d'un doseur non représenté.

Les disques malaxeurs 33 et les "contre-filets" 36 contribuent au mélange des additifs et de la masse fondue.

Ces additifs peuvent être constitués par des arômes, de colorants, des édulcorants complémentaires sous la forme de sucres hydrogénés, des sucres non hydrogénés, ou bien encore des édulcorants renforcés comme l'aspartame, des agents de texture comme les hydrocoloïdes.

Dans la description qui précède, le transporteur à vis comprend deux vis, mais un transporteur à une seule vis peut également être utilsé pour la mise en oeuvre du procédé.

Cependant, le transporteur à vis du type à deux vis corotatives est particulièrement bien adapté à la transformation d'une substance de charge telle que le polydextrose afin d'obtenir un produit de confiserie du type "sucre cuit" conforme à une recette donnée. En effet, il est d'une grande souplesse tant dans la constitution des éléments des vis, que dans le réglage des paramètres fonctionnels c'est à dire la vitesse de rotation, l'énergie de chauffage et le refroidissement.

Contrairement au transporteur à vis du type mono-vis, la transformation de la matière s'effectue avec un remplissage partiel de l'espace compris entre les vis et le fourreau. Une certaine indépendance existe entre le débit de la machine qui correspond au débit réglé par le doseur d'alimentation, et la vitesse de rotation des vis elles-mêmes, ceci du moins jusqu'à un débit maximal qui correspond au "gavage" du fourreau.

L'énergie mécanique fournie par le moteur d'entraînement est, aux pertes mécaniques près, utilisée en énergie de transformation de la matière sous forme de malaxage, de cisaillement, de convoyage, mais également sous la forme d'augmentation de sa température, une partie de cette énergie de transformation étant dissipée sous forme thermique au sein même de la matière.

De plus, grâce à la rotation des vis dans le même sens, il se produit un retournement de la matière dans la zone d'interpénétration des filets qui est particulièrement efficace pour assurer son malaxage et son mélange.

Par conséquent, pour un débit du produit de charge réglé à l'entrée du transporteur à vis, par le réglage de la rotation des vis, par l'apport d'énergie thermique dans certaines zones du fourreau et par le refroidissement d'autres zones, il est possible d'obtenir très exactement le profil longitudinal de température optimale pour la transformation de la substance de charge utilisée et son conditionnement.

Le procédé selon la présente invention permet également de réaliser de manière très simple les produits de confiserie du type foisonné. Dans ces produits, il est recherché un aspect opaque, qui est en fait obtenu par l'inclusion dans la masse vitreuse du sucre cuit de nombreuses bulles d'air de faibles dimensions.

Pour cette application, le procédé consiste essentiellement à augmenter la vitesse de rotation des vis, l'énergie totale apportée à la matière étant inchangée par une réduction de la chaleur extérieure apportée par les moyens de chauffage. De la sorte, la matière est intimement mélangée, malaxée à une partie du gaz contenu dans le fourreau et présente à la sortie de la machine l'effet recherché.

Une injection d'air à l'aval de la zone d'incorporation des additifs peut également être réalisée.

On va maintenant indiqué ci-après plusieurs exemples de mise en oeuvre du procédé selon l'invention.

### EXEMPLES DE MISE EN OEUVRE OU PROCEDE

### Exemple 1 : SUCRE CUIT A BASE DE POLYDEXTROSE PULVERULENT SEUL

### FORMULE

. Base
   Produit de charge polydextrose sous forme commerciale pulvérulente,
. Additifs "solides"
   - acide citrique: 0,8%
   - aspartame: 0,2%
. Additifs "liquides"
   eau 7%
   arôme citron 0,5%

### MODE OPERATOIRE

. Transporteur à vis : du type "bi-vis corotatives" modèle BC 45 de la société CLEXTRAL, la constitution interne est conforme à ce qui est décrit.
. Additifs "solides" introduits avec le polydextrose dans la trémie principale d'alimentation (zone A).
. Additifs "liquides"
   - eau injectée en zone A
   - arôme injecté en zone E
. Débit de masse cuite 30 Kg/h
. Consommation d'énergie spécifique (moteur d'entrainement et chauffage zones A, B) 200 Wh/kg
. Refroidissement des zones E et F en circulation
. Vitesse de rotation des vis : 125 t/mn
. Dégazage en zone C à la pression atmosphèrique, l'humidité résiduelle du produit en sortie du transporteur est de 5%.
. Température maximale du porduit à l'amont de la tuyauterie de dégazage 130°C.
. Température sortie produit 125°C.
. Temps de séjour moyen du produit dans le transporteur : 2 mn

### OBSERVATIONS :

En sortie du transporteur, le produit se présente comme un sucre cuit traditionnel, vitreux, limpide et d'une couleur très légèrement jaune. A l'examen au microscope, il apparait comme entièrement fondu.

Les tests organoleptiques sont satisfaisants et conformes à ceux d'un produit type bonbon dur. On notera en particulier l'absence d'amertume pouvant résulter d'une dégradation du polydextrose, ou bien encore de l'aspartame. Ceci résulte du temps de séjour très court. Il est à noter que des tests ont également été réalisés sans addition d'arôme et d'acide citrique, le produit a une saveur légèrement acide conforme au produit de base et également sans amertume.

### EXEMPLE 2 : SUCRE CUIT A BASE DE POLYDEXTROSE PULVERULENT ET D'UNE SOLUTION DE POLYDEXTROSE N.

### FORMULE

. Base
   Polydextrose pulvérulent : 47,5%
   Polydextrose-N
   (solution à 30% d'eau) : 51,0%
. Additifs "solides"
   - acide citrique: 0,8%
   - aspartame: 0,2%
. Additifs "liquides"
   arôme 0,5%

### MODE OPERATOIRE

Les conditions opératoires sont identiques à celles de l'exemple 1, à l'exception des points suivants :
. Le polydextrose-N est injecté dans la zone A (injection d'eau de l'exemple 1)
. Le dégazage en zone C est réalisé sous une pression absolue de 800 m bars.

### OBSERVATIONS :

L'aspect du produit et ses caracatères organoleptiques sont identiques à ceux observés à l'exemple 1.

On notera pour cet exemple n°2, l'utilisation d'un mélange de polydextrose et de polydrextose-N. L'eau apportée par ce dernier correspond à une concentration de l'ordre de 15% sur la formule "brute" à l'entrée du transporteur; à la sortie la teneur en eau résiduelle de la masse cuite est de 5 à 6%.

## Revendications

1. Procédé de préparation de confiseries à partir de produits de charge constitués par un polydextrose, caractérisé en ce que l'on effectue une addition d'eau inférieure à ce qui est nécessaire pour la mise en solution complète du produit et une fusion contrôlée de ce produit directement dans un transporteur à vis (1), ladite addition d'eau et ladite fusion réalisées en continu dans le transporteur à vis (1) comprenant :
- une phase A d'alimentation du produit de charge, d'injection d'eau et de chauffage,
- une phase B de malaxage et de chauffage pour l'obtention d'une masse fondue,
- une phase C de dégazage et de convoyage de la masse fondue,
- une phase D de malaxage et de refroidissement de la masse fondue,
- et une zone E d'incorporation d'additifs et d'évacuation de la masse fondue.

2. Procédé selon la revendication 1, caractérisé en ce que l'on effectue l'incorporation des additifs en même temps que le produit de charge.

3. Procédé selon la revendication 1, caractérisé en ce que la phase A d'alimentation en produit de charge, d'injection d'eau et de chauffage comprend plusieurs phases successives A2, A3, A4 de malaxage et d'homogénéisation du produit de charge avec l'eau d'appoint.

4. Procédé selon la revendication 1, caractérisé en ce que la phase B de malaxage et de chauffage comprend une phase B1 d'homogénéisation, une phase B2 de cisaillement, une phase B3 de transfert et une phase B4 de freinage de la masse fondue.

5. Procédé selon la revendication 1, caractérisé en ce que la phase C de dégazage et de convoyage comprend une phase C1 de réhomogénéisation de la masse fondue.

6. Procédé selon la revendication 1, caractérisé en ce que la phase D de malaxage et de refroidissement comprend une première phase D1 de cisaillement, une phase D2 de transfert et une deuxième phase D3 de cisaillement de la masse fondue.

7. Procédé selon la revendication 1, caractérisé en ce que la phase E d'incorporation d'additifs comprend une phase E2 de compression et une phase E3, E4 d'homogénéisation et de mélange des additifs avec la masse fondue.

8. Procédé selon l'une quelconque des revendications précédentes, caracterisé en ce que l'on effectue dans le transporteur à vis (1) un mélange d'air et de la masse fondue.

9. Procédé selon l'une quelconque des revendications précédentes, caractérisé en ce que l'on effectue dans le transporteur à vis (1) une injection d'air à l'aval de la phase d'incorporation des additifs.

## Patentansprüche

1. Verfahren zur Herstellung von Süßwaren, ausgehend von Ausgangsmaterialien, die durch eine Polydextrose gebildet sind, **dadurch gekennzeichnet**, daß man in einem Schneckenförderer (1) eine Wassermenge zusetzt. die geringer ist als die, welche dazu erforderlich ist, das Produkt vollständig in Lösung zu bringen und dieses Produkt direkt einem gesteuerten Schmelzen unterwift, wobei die Zugabe des Wassers und das Schmelzen kontinuierlich in dem Schneckenförderer (1) durchgeführt wird, welcher:
- eine Phase A der Zufuhr des Ausgangsmaterials, der Zugabe von Wasser und des Erhitzens,
- eine Phase B des Knetens und des Erhitzens zur Bildung einer geschmolzenen Masse,
- eine Phase C des Entgasens und der Förderung der geschmolzenen Masse,
- eine Phase D des Verknetens und des Abkühlens der geschmolzenen Masse, und
- eine Zone E zur Zugabe von Additiven und zur Entnahme der geschmolzenen Masse umfaßt.

2. Verfahren nach Anspruch 1, **dadurch gekennzeichnet**, daß man die Zugabe der Additive gleichzeitig mit der des Ausgangsmaterials bewirkt.

3. Verfahren nach Anspruch 1, **dadurch gekennzeichnet**, daß die Phase A der Zufuhr des Ausgangsmaterials, der Zugabe von Wasser und des Erhitzens mehrere aufeinander folgende Phasen A2, A3, A4 des Verknetens und der Homogenisierung des Ausgangsmaterials mit dem vorhandenen Wasser umfaßt.

4. Verfahren nach Anspruch 1, **dadurch gekennzeichnet,** daß die Phase B des Verknetens und des Erhitzens eine Phase B1 der Homogenisierung, eine Phase B2 des Schneidens, eine Phase B3 des Förderns und eine Phase B4 des Abbremsens der geschmolzenen Masse umfaßt.

5. Verfahren nach Anspruch 1, **dadurch gekennzeichnet**, daß die Phase C des Entgasens und des Förderns eine Phase C1 der erneuten Homogenisierung der geschmolzenen Masse umfaßt.

6. Verfahren nach Anspruch 1, **dadurch gekennzeichnet**, daß die Phase D des Verknetens und des Abkühlens eine erste Phase D1 des Schneidens, eine Phase D2 des Förderns und eine zweite Phase D3 des Schneidens der geschmolzenen Masse umfaßt.

7. Verfahren nach Anspruch 1, **dadurch gekennzeichnet**, daß die Phase D der Zugabe der Additive eine Phase E2 des Verdichtens und eine Phase E3, E4 der Homogenisierung und des Vermischens der Additive mit der geschmolzenen Masse umfaßt.

8. Verfahren nach einem der vorhergehenden Ansprüche, **dadurch ge****kennzeichnet**, daß man in dem Schneckenförderer (1) ein Durchmischen von Luft mit der geschmolzenen Masse bewirkt.

9. Verfahren nach einem der vorhergehenden Ansprüche, **dadurch ge****kennzeichnet**, daß man in dem Schneckenförderer (1) die Zuführung von Luft stromabwärts der Phase der Zugabe von Additiven bewirkt.

## Claims

1. Process for preparing confectionery from filler products consisting of a polydextrose, characterised in that a quantity of water is added which is less than the quantity required to dissolve the product completely and controlled melting of this product is carried out directly in a screw conveyor (1), said addition of water and said melting being carried out continuously in the screw conveyor (1) and comprising:
- a phase A of supplying the filler product, injecting water and heating,
- a phase B of mixing and heating to obtain a molten mass,
- a phase C of degassing and conveying the molten mass,
- a phase D of mixing and cooling the molten mass,
- and a zone E for incorporating additives and discharging the molten mass.

2. Process according to claim 1, characterised in that the additives are incorporated at the same time as the filler product.

3. Process according to claim 1, characterised in that phase A, namely supplying the filler product, injecting water and heating, comprises number of successive phases A2, A3, A4 of mixing and homogenising the filler product with the requisite quantity of water

4. Process according to claim 1, characterised in that phase B, namely mixing and heating, comprises a homogenising phase B1, a shearing phase B2, a transfer phase B3 and a deceleration phase B4 for the molten mass.

5. Process according to claim 1, characterised in that the degassing and conveying phase C comprises a phase C1 of rehomogenising the molten mass.

6. Process according to claim 1, characterised in that the mixing and cooling phase D comprises a first shearing phase D1, a transfer phase D2 and a second shearing phase D3 of the molten mass.

7. Process according to claim 1, characterised in that phase E of incorporating additives comprises a compression phase E2 and a phase E3, E4 of homogenising and mixing additives with the molten mass.

8. Process according to any of the preceding claims, characterised in that the molten mass mixed with air in the screw conveyor (1).

9. Process according to any of the preceding claims, characterised in that air is injected in the screw conveyor (1) downstream of the phase of incorporating the additives.
